# EUROPEAN PATENT SPECIFICATION

(11) **EP 4 364 965 B1**
(45) Date of publication and mention of the grant of the patent: **31.12.2025**
(21) Application number: 21948489.6
(22) Date of filing: 18.11.2021
(51) Int. Cl.: B60C 9/17, B60C 15/00, B60C 19/00

(54) **TIRE**
REIFEN
PNEU

(30) Priority: 30.06.2021 JP 2021109739
(43) Date of publication of application: 08.05.2024
(73) Proprietor: BRIDGESTONE CORPORATION, Chuo-ku Tokyo 104-8340 (JP)
(72) Inventor: SHIMURA, Takashi, Tokyo 104-8340 (JP)
(74) Representative: Marks & Clerk LLP
(86) International application number: PCT/JP2021/042504
(87) International publication number: WO 2023/276186

(56) References cited:
- JP-A- 2008 265 499
- JP-A- 2014 028 569
- JP-A- 2018 008 614
- JP-A- 2018 008 614
- JP-A- 2020 055 450
- JP-A- 2020 055 450
- JP-A- 2021 000 854

## Description

### TECHNICAL FIELD

The present invention relates to a tire.

### BACKGROUND

A configuration in which a communication device such as an RF tag is embedded in a tire is known. For example, Patent Literature (PTL) 1 describes a tire with an RF tag disposed in a sidewall portion of the tire.

### CITATION LIST

### Patent Literature

PTL 1: JP 2020-55450 A
PTL 2: JP 2008-265499 A discloses a pneumatic tire comprising folding ends of a carcass layer being arranged asymmetrically in right and left, and the vehicle-outside folding end being overlapped with a belt layer, while the vehicle-inside folding end is arranged inside the tire maximum width position in the radial direction.
PTL 3: JP 2018-008614 A discloses a pneumatic tire of which an installation direction for a vehicle is designated, a drawing height H1 of a folding part on a vehicle inner side of a carcass layer is differed from a drawing height H2 of a folding part on a vehicle outer side of the carcass layer so that the drawing heights H1 and H2 satisfy a relation of H1 < H2, and a partial tie rubber layer is selectively located in each of areas on tire width direction both sides which is between the carcass layer and an inner liner layer excluding a center region of a tread part.
PTL 4: JP 2020-055450 A discloses a tire that includes: a tread having an annular steel belt extending in a circumferential direction of the tire; a pair of beads having a bead filler extending on an outer side in a tire radial direction of a bead core; and an RFID tag embedded in a region between an outer end in the tire radial direction of the bead filler and an outer end in a tire width direction of the steel belt.

### SUMMARY

### (Technical Problem)

With conventional tires, when a load is applied to a tire, a communication device installed therein may be damaged due to the load applied to the communication device. Therefore, there is still a need to improve the durability of the communication device disposed in the tire.

In view of these circumstances, it would be helpful to provide a tire that improves the durability of a communication device disposed in the tire.

### (Solution to Problem)

A tire according to claim 1.

### (Advantageous Effect)

According to the present invention, a tire that improves the durability of a communication device disposed in the tire can be provided.

### BRIEF DESCRIPTION OF THE DRAWINGS

In the accompanying drawings:
FIG. 1 is a cross-sectional view, in a tire width direction, of a tire in accordance with the invention;
FIG. 2 is a cross-sectional view, in a tire width direction, of a first example of a modification to the of the tire illustrated in FIG. 1;
FIG. 3 is a cross-sectional view, in a tire width direction, of a second example of a modification to the tire illustrated in FIG. 1; and
FIG. 4 is a cross-sectional view, in a tire width direction, of a tire not in accordance with, but useful for understanding the invention.

### DETAILED DESCRIPTION

The following describes embodiments of a tire, with reference to the drawings. Members and portions that are common to each drawing use the same reference signs. Note, however, that the drawings are schematic and that the proportions of each dimension and the like may differ from those in reality.

In the present specification, "tire width direction" refers to a direction parallel to a rotation axis of the tire. "Tire radial direction" refers to a direction perpendicular to the rotation axis of the tire. "Tire circumferential direction" refers to a direction in which the tire rotates centered on the rotation axis of the tire.

Further, in the present specification, "tire radial direction inner side" refers to a side along the tire radial direction closer to the rotation axis of the tire, and "tire radial direction outer side" refers to a side along the tire radial direction farther from the rotation axis of the tire. On the other hand, "tire width direction inner side" refers to a side along the tire width direction closer to a tire equatorial plane, denoted as CL, and "tire width direction outer side" refers to a side along the tire width direction farther from the tire equatorial plane CL.

In the present specification, the "tire equatorial plane" is a plane, in a cross section in the tire width direction of the tire, that is perpendicular to a bead line at a midpoint of the bead line, the bead line being a straight line connecting centers of a pair of bead cores.

Unless otherwise noted, in the present specification, the positional relationship or the like of each element of the tire is measured in a standard state. The "standard state" is a state in which the tire is fitted to a rim of a wheel that is an applicable rim, a prescribed internal pressure is applied, and no load is applied. The following describes a tire that has a cavity filled with air and is installed on a vehicle such as a passenger vehicle. However, the cavity of the tire may be filled with a fluid other than air, and the tire may be installed on a vehicle other than a passenger vehicle.

In the present specification, "applicable rim" (Measuring Rim in the STANDARDS MANUAL of ETRTO and Design Rim in the YEAR BOOK of TRA) refers to an approved rim of an applicable size as described by, or as described in the future by, valid industrial standards for the region in which a tire is produced or used, such as the JATMA YEAR BOOK of JATMA (the Japan Automobile Tyre Manufacturers Association) in Japan, the STANDARDS MANUAL of ETRTO (European Tyre and Rim Technical Organization) in Europe, and the YEAR BOOK of TRA (The Tire and Rim Association, Inc.) in the U.S. In a case in which a rim size is not described in the industrial standards, the "applicable rim" refers to a rim with a width corresponding to a bead width of the pneumatic tire. The "applicable rim" includes current sizes as well as sizes that will be included in the future in the above industrial standards. Examples of "sizes described in the future" may include sizes as described in "FUTURE DEVELOPMENTS" in the 2013 edition of the STANDARDS MANUAL of ETRTO.

In the present specification, "prescribed internal pressure" refers to an air pressure (maximum air pressure) corresponding to the maximum load capability of a single wheel in an applicable size and ply rating as described in the JATMA YEAR BOOK or other industrial standards. In case of a size not described in the above industrial standard, the "prescribed internal pressure" refers to an air pressure (the maximum air pressure) corresponding to the maximum load capability prescribed for each vehicle on which the tire is installed. Furthermore, in the present specification, "prescribed load" refers to a load corresponding to the maximum load capability of a single wheel in an applicable size and ply rating as described in the above industrial standards. In case of a size not described in the above industrial standards, the "prescribed load" refers to a load corresponding to the maximum load capability prescribed for each vehicle on which the tire is installed.

### (First Tire)

The following describes a tire 1, with reference to the drawings.

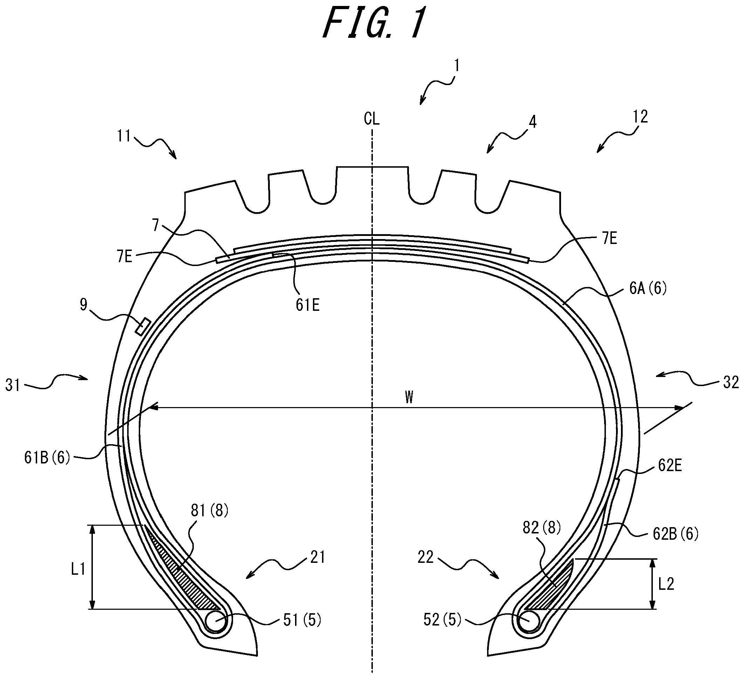

FIG. 1 is a cross-sectional view, cut along the tire width direction, of the tire 1.

The tire 1 includes a first half portion 11 on a vehicle installation outer side and a second half portion 12 on a vehicle installation inner side, with respect to the tire equatorial plane CL. In the present specification, "vehicle installation outer side" of the tire 1 refers to a side of the tire 1 that is farther from the center of a vehicle when the tire 1 is installed on the vehicle, and "vehicle installation inner side" of the tire 1 refers to a side of the tire 1 that is closer to the center of the vehicle when the tire 1 is installed on the vehicle.

The tire 1 has a pair of bead portions 2, a pair of sidewall portions 3, and a tread portion 4. The sidewall portions 3 extend between the tread portion 4 and the bead portions 2. The pair of bead portions 2 includes a first bead portion 21 positioned in the first half portion 11 and a second bead portion 22 positioned in the second half portion 12. The pair of sidewall portions 3 includes a first sidewall portion 31 positioned in the first half portion 11 and a second sidewall portion 32 positioned in the second half portion 12. The tread portion 4 extends over the first half portion 11 and the second half portion 12. As described in detail below, a communication device 9 is embedded in the first sidewall portion 31 of the first half portion 11 of the tire 1.

The tire 1 includes a pair of bead cores 5 arranged respectively in the pair of bead portions 2, a carcass 6 comprising one or more plies that extend toroidally between the pair of bead cores 5, and a belt 7 comprising one or more belt layers arranged on the tire radial direction outer side of a crown region of the carcass 6. The pair of bead cores 5 includes a first bead core 51 positioned in the first half portion 11 and a second bead core 52 positioned in the second half portion 12.

The bead cores 5 (respectively the first bead core 51 and the second bead core 52) comprise annular cable beads that extend in the tire circumferential direction. The cross-sectional shape of faces that are perpendicular to an extension direction of the bead cores 5 (the cross-sectional shape in the tire width direction) is circular or approximately circular. However, the cross-sectional shape, in the tire width direction, of the bead cores 5 may be any shape, such as a square shape or a hexagonal shape. The cable beads are, for example, formed from high-carbon steel wire covered with rubber. A bead filler 8 formed from a rubber material or the like is disposed on the tire radial direction outer side of the bead cores 5. The bead filler 8 includes a first bead filler 81 positioned in the first half portion 11 and a second bead filler 82 positioned in the second half portion 12.

In a cross section in the tire width direction of the tire 1, the first bead filler 81 is longer, in the tire radial direction, than the second bead filler 82. More specifically, a length L1, in the tire radial direction, of the first bead filler 81 is longer than a length L2, in the tire radial direction, of the second bead filler 82. Accordingly, the rigidity of the first sidewall portion 31 of the first half portion 11, in which the communication device 9 is embedded, can be improved. On the other hand, by keeping the length of the second bead filler 82 in the second half portion 21 shorter, any gain in weight of the tire 1 due to the embedding of the communication device 9 can be suppressed.

The carcass 6 comprises the one or more plies (one in the present tire) that extend toroidally between the first bead core 51 and the second bead core 52. The plies are formed from multiple cords covered with rubber. The cords that form the plies are, for example, organic fiber cords such as nylon cords. Accordingly, the carcass 6 becomes less likely to interfere with the communication of the communication device 9 compared to a case in which the plies are formed from metal cords. However, the cords that form the plies may be formed from any material and may be, for example, metal cords such as steel cords. The cords are arranged to extend in the tire width direction in the tread portion 4. That is, the carcass 6 has a radial structure. The carcass 6 is fastened to the pair of bead cores 5.

Specifically, the carcass 6 includes a carcass body portion 6A, a first carcass foldback portion 61B, and a second carcass foldback portion 62B. The carcass body portion 6A extends toroidally between the first bead core 51 and the second bead core 52. The first carcass foldback portion 61B extends from the carcass body portion 6A, folds back around a perimeter of the first bead core 51 from the tire width direction inner side to the tire width direction outer side, and extends to the tire radial direction outer side. The second carcass foldback portion 62B extends from the carcass body portion 6A, folds back around a perimeter of the second bead core 52 from the tire width direction inner side to tire width direction outer side, and extends to the tire radial direction outer side.

In a cross section in the tire width direction of the tire 1, the first carcass foldback portion 61B is longer, in the tire radial direction, than the second carcass foldback portion 62B. That is, a first end 61E of the tire radial direction outer side of the first carcass foldback portion 61B is positioned further to the tire radial direction outer side than a second end 62E of the tire radial direction outer side of the second carcass foldback portion 62B.

The belt 7 is arranged on the tire radial direction outer side of the crown region of carcass 6. The belt 7 is formed from one or more belt layers (two in the present tire) layered in the tire radial direction in the tire equatorial plane CL. For the tread portion 4, the belt 7 is disposed so as to cover the carcass 6 from the tire radial direction outer side. The belt 7 extends over the first half portion 11 and the second half portion 12. In the present specification, of the one or more belt layers, the belt layer having a length that is longest in the tire width direction is also referred to as a "maximum width belt layer". The ends 7E of the tire width direction outer side of the maximum width belt layer of the belt 7 are also referred to simply as the ends 7E of the tire width direction outer side of the belt 7. Of the two belt layers, the belt layer of the tire radial direction inner side is the maximum width belt layer. However, the maximum width belt layer is not necessarily the belt layer that is innermost in the tire radial direction. When the belt 7 is formed from one belt layer, the maximum width belt layer specifies this one belt layer.

The communication device 9 is disposed in the tire 1.

The communication device 9 communicates wirelessly. The communication device 9 is, for example, an RF (radio frequency) tag. The RF tag may also be referred to as an RFID (Radio Frequency Identification) tag. The communication device 9 includes an IC (integrated circuit) chip that forms a controller and a memory unit, and one or more antennas connected to the IC chip. The IC chip may store any information relating to the tire 1, such as identification information and the date of manufacture of the tire 1. For example, the communication device 9 has two antennas extending linearly, in a wavy shape, or in a spiral shape. The two antennas are disposed so as to extend in opposite directions from the IC chip, and the device as a whole may have a longitudinal shape.

The IC chip may be operated by a dielectric electromotive force generated by electromagnetic waves received by the one or more antennas. That is, the communication device 9 may be a passive communication device. Alternatively, the communication device 9 may further include a battery and be able to communicate by generating electromagnetic waves under its own power. That is, the communication device 9 may be an active communication device.

The communication device 9 is embedded in the first sidewall portion 31 of the first half portion 11. Specifically, the communication device 9 is embedded in the first sidewall portion 31 of the first half portion 11, further to the tire radial direction inner side than the first end 61E of the first carcass foldback portion 61B and further to the tire radial direction outer side than the second end 62E of the second carcass foldback portion 62B. Accordingly, by virtue of the first carcass foldback portion 61B extending in the first sidewall portion 31 of the first half portion 11 to the tire radial direction outer side, further than the position in which the communication device 9 is embedded, the rigidity of the first sidewall portion 31 in the vicinity of the communication device 9 is increased. Therefore, for example, any out-of-plane deformation to the tire width direction outer side in the first sidewall portion 31 can be suppressed when a load in the tire radial direction is applied to the tire 1. Accordingly, the durability of the communication device 9 embedded in the first sidewall portion 31 of the first half portion 11 is improved. At this time, the length of the second carcass foldback portion 62B in the second half portion 12, in which the communication device 9 is not embedded, is not the same as that of the first carcass foldback portion 61B, and by keeping the length of the second carcass foldback portion shorter, the weight gain of the tire 1 due to the embedding of the communication device 9 can be suppressed.

Then, by virtue of the first carcass foldback portion 61B of the first half portion 11 extending to the tire radial direction outer side, the anti-cut resistance of the first half portion 11 is improved. This is also effective in improving the durability of the first half portion 11 on the vehicle installation outer side, which is more likely to contact obstacles such as curbstones or small stones while the vehicle is in motion. Further, by embedding the communication device 9 further to the tire radial direction outer side than the second end 62E of the second carcass foldback portion 62B, the second carcass foldback portion 62B is not arranged at positions in the second half portion 12 that are on the vehicle installation inner side from the communication device 9. Accordingly, the second half portion 12 becomes less likely to interfere with the communication of the communication device 9 when the communication device 9 communicates with an electronic device positioned on the vehicle installation inner side of the tire 1. The communication device 9 is described as being completely embedded in the tire 1. However, the communication device 9 being embedded in the tire 1 can encompass at least a part of the communication device 9 being embedded in the tire 1.

The first end 61E of the tire radial direction outer side of the first carcass foldback portion 61B is positioned further to the tire width direction inner side than the end 7E of the tire width direction outer side of the belt 7 in the first half portion 11. That is, an envelope structure is employed in the first half portion 11 of the carcass 6. The first end 61E of the first carcass foldback portion 61B is positioned further to the tire radial direction outer side than the carcass body portion 6A and is positioned further to the tire radial direction inner side than the belt 7. Thus, by virtue of the first carcass foldback portion 61B extending over the entirety of the first sidewall portion 31, the rigidity of the first sidewall portion 31 is increased compared to a configuration in which the first carcass foldback portion 61B terminates in the middle of the first sidewall portion 31. Accordingly, the durability of the communication device 9 embedded in the first sidewall portion 31 of the first half portion 11 is further improved.

The communication device 9 is embedded in the first sidewall portion 31 of the first half portion 11, further to the tire width direction outer side than the first carcass foldback portion 61B. Accordingly, when the communication device 9 communicates with an electronic device positioned on the vehicle installation outer side of the tire 1, the carcass 6 does not interfere with the communication performance of the communication device 9, and the communication performance of the communication device 9 is improved.

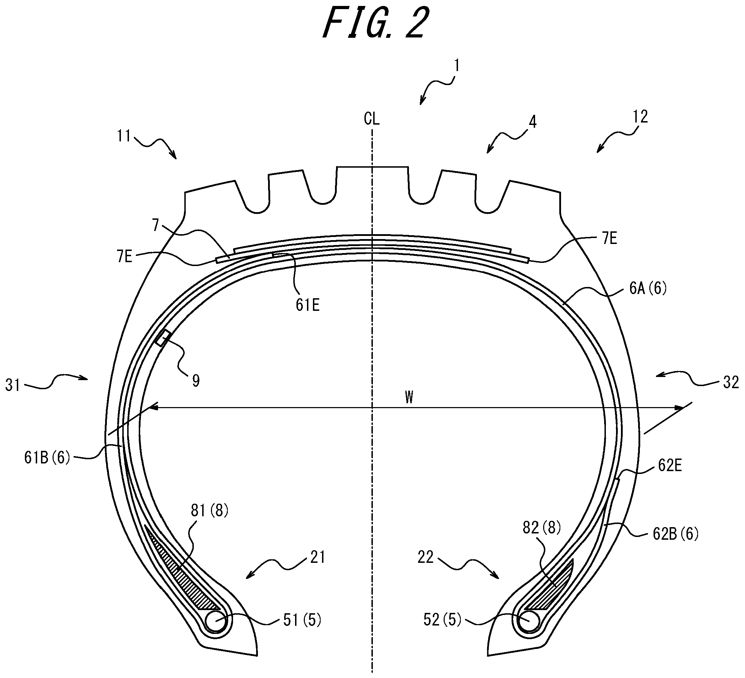

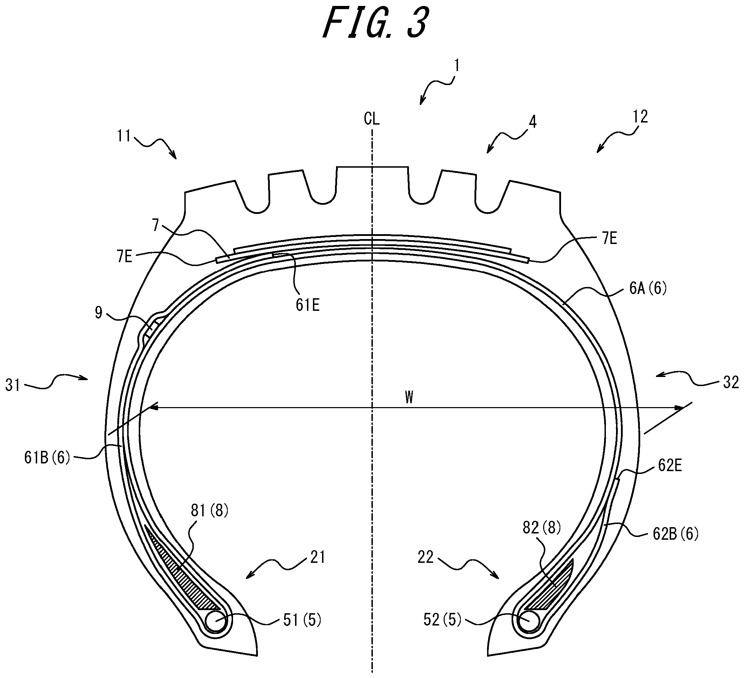

However, the position where the communication device 9 is embedded in the first sidewall portion 31 of the first half portion 11 is not limited to the example shown in FIG. 1. FIG. 2 and FIG. 3 illustrate an example of a modification to the tire 1 in which the position where the communication device 9 is embedded has been changed. FIG. 2 is a cross-sectional view, in the tire width direction, of a first example of a modification to the tire 1 illustrated in FIG. 1. FIG. 3 is a cross-sectional view, in the tire width direction, of a second example of a modification to the tire 1 illustrated in FIG. 1.

For example, as illustrated in FIG. 2, the communication device 9 may be embedded in the first sidewall portion 31 of the first half portion 11, further to the tire width direction inner side than the carcass body portion 6A. Generally, when a load in the tire radial direction is applied to tire 1, the sidewall portions 3 bend to the tire width direction outer sides. At this time, in the sidewall portions 3, a stretching deformation in the tire radial direction occurs closer to the tire width direction outer side, and a compression deformation in the tire radial direction occurs closer to the tire width direction inner side. Because the communication device 9 is particularly susceptible to damage when tensile strain is applied to the communication device 9, by embedding the communication device 9 further to the tire width direction inner side than the carcass body portion 6A, the communication device 9 becomes less susceptible to damage when a load in the tire radial direction is applied to the tire 1.

Alternatively, as illustrated in FIG. 3, the communication device 9 may be embedded in the first sidewall portion 31 of the first half portion 11, further to the tire width direction outer side than the carcass body portion 6A and further to the tire width direction inner side than the first carcass foldback portion 61B. By covering the inner side and the outer side of the communication device 9 in the tire width direction with the carcass body portion 6A and the first carcass foldback portion 61B, respectively, the communication device 9 is less susceptible to being damaged by an impact from an outer surface or an inner surface of the tire 1.

Referring again to FIG. 1, the communication device 9 is positioned in the first sidewall portion 31 of the first half portion 11, further to the tire radial direction outer side than a position of the tire maximum width W. Here, the position of the "tire maximum width W" is a position where the length of the tire 1 in the width direction is longest when the tire 1 is in the standard state, i.e., fitted to an applicable rim, a prescribed internal pressure is applied, and no load is applied. Accordingly, other parts of the tire 1 become less likely to interfere with the communication of the communication device 9 when the communication device 9 communicates with electronic devices positioned further to the tire radial direction outer side than the tire 1, such as a road surface. Therefore, it is possible to balance the communication performance of the communication device 11 in the tire radial direction with the communication performance of the communication device 11 in the tire width direction.

On the other hand and not according to the present invention, the communication device 9 may be positioned in the first sidewall portion 31 of the first half portion 11, further to the tire radial direction inner side than the position of the tire maximum width W. When embedding the communication device 9 further to the tire radial direction inner side of the tire than the position of the tire maximum width W, obstacles such as curbstones or small stones become less likely to strike the outer surface of the embedded position of the communication device 9. Therefore, the communication device 9 is less susceptible to damage.

### (Second Tire)

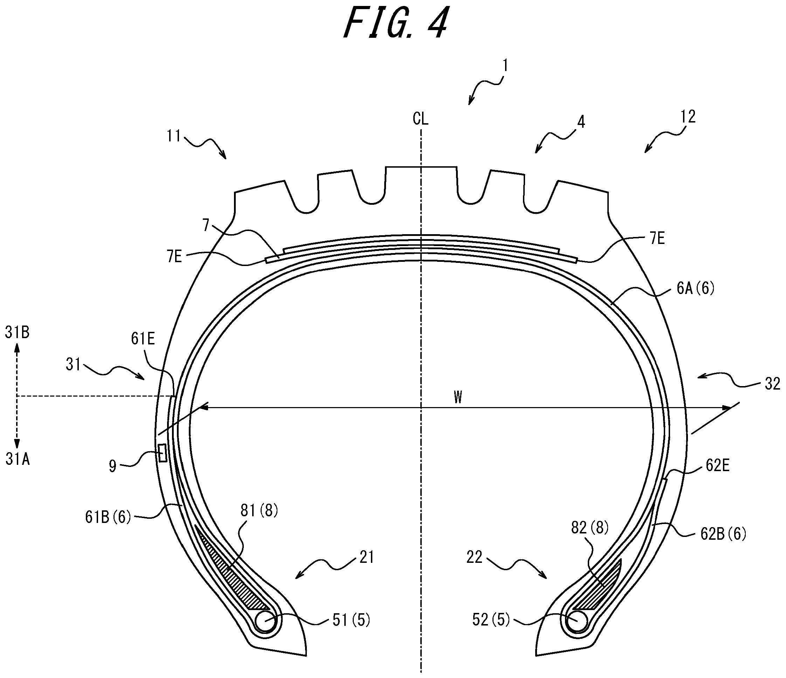

The following describes a tire 1 with reference to FIG. 4. FIG. 4 is a cross-sectional view, cut along the tire width direction, of the tire 1.

As illustrated in FIG. 4, the position of the first end 61E of the tire radial direction outer side of the first carcass foldback portion is different from that of FIG. 1. The following focuses on the differences. Portions that have the same configuration use the same reference signs.

In the cross section in the tire width direction of the tire 1, the first carcass foldback portion 61B is longer, in the tire radial direction, than the second carcass foldback portion 62B. More specifically, the first end 61E of the tire radial direction outer side of the first carcass fold 61B is positioned further to the tire radial direction outer side than the second end 62E of the tire radial direction outer side of the second carcass foldback portion 62B. Further, the communication device 9 is embedded in the first sidewall portion 31 of the first half portion 11.

The first end 61E of the tire radial direction outer side of the first carcass foldback portion 61B is positioned further to the tire width direction outer side than the end 7E of the tire width direction outer side of the belt 7 in the first half portion 11. That is, the first sidewall portion 31 includes, in the tire radial direction, an inner portion 31A, in which the first carcass foldback portion 61B of the carcass 6 is arranged, and an outer portion 31B, in which the first carcass foldback portion 61B is not arranged. The inner portion 31A of the first sidewall portion 31 is more rigid than the outer portion 31B due to the first carcass foldback portion 61B being arranged therein. Thus, for example, when a load in the tire radial direction is applied to the tire 1, due to the difference in rigidity between the inner portion 31A and the outer portion 31B of the first sidewall portion 31, the outer portion 31B of the first sidewall portion 31 is more susceptible to bending and the inner portion 31A is less susceptible to bending. Accordingly, any out-of-plane deformation to the tire width direction in the inner portion 31A of the first sidewall portion 31 is suppressed. Thus, by embedding the communication device 9 in the inner portion 31A of the first sidewall portion 31, where the first carcass foldback portion 61B is arranged, the communication device 9 becomes less susceptible to damage. In the illustrated example, the first end 61E of the tire radial direction outer side of the first carcass foldback portion 61B is positioned near the position of the tire maximum width W. However, the first end 61E of the tire radial direction outer side of the first carcass foldback portion 61B may be at any position in the tire radial direction that is further to the tire width direction outer side than the second end 62E of the tire radial direction outer side of the second carcass foldback portion 62B.

The communication device 9 is embedded on the tire width direction outer side of the first carcass foldback portion 61B of the carcass 6. However, the communication device 9 may be embedded in the first sidewall portion 31 of the first half portion 11, further to the tire width direction inner side than the carcass body portion 6A. Alternatively, the communication device 9 may be embedded in the first sidewall portion 31 of the first half portion 11, further to the tire width direction outer side than the carcass body portion 6A and further to the tire width direction inner side than the first carcass foldback portion 61B.

In an example not according to the invention, the communication device 9 is positioned in the first sidewall portion 31 of the first half portion 11, further to the tire radial direction inner side than the position of the tire maximum width W. However, the communication device 9 may be positioned in the first sidewall portion 31 of the first half portion 11, further to the tire radial direction outer side than the position of the tire maximum width W.

As described above, the tire 1 includes the first half portion 11 on the vehicle installation outer side and the second half portion 12 on the vehicle installation inner side with respect to the tire equatorial plane CL and comprises a carcass 6 that extends between a first bead core 51 positioned in the first half portion 11 and a second bead core 52 positioned in the second half portion 12. The carcass 6 comprises a carcass body portion 6A that extends toroidally between the first bead core 51 and the second bead core 52, a first carcass foldback portion 61B that extends from the carcass body portion 6A, folds back around a perimeter of the first bead core 51 from the tire width direction inner side to the tire width direction outer side, and extends to the tire radial direction outer side, and a second carcass foldback portion 62B that extends from the carcass body portion 6A, folds back around a perimeter of the second bead core 52 from the tire width direction inner side to the tire width direction outer side, and extends to the tire radial direction outer side. The first end 61E of the tire radial direction outer side of the first carcass foldback portion 61B is positioned further to the tire radial direction outer side than the second end 62E of the tire radial direction outer side of the second carcass foldback portion 62B. The communication device 9 is embedded in a sidewall portion 31 of the first half portion 11, further to the tire radial direction inner side than the first end 61E and further to the tire radial direction outer side than the second end 62E. Such a configuration can improve the durability of the communication device 9 disposed in the first sidewall portion 31 of the first half portion 11 while suppressing the weight gain of the tire 1 by keeping the length of the second carcass foldback portion 62B in the second half portion 12 shorter.

The tire 1 further includes a belt 7 arranged on the tire radial direction outer side of the crown region of the carcass 6, and the first end 61E of the first carcass foldback portion 61B is preferably positioned further to the tire width direction inner side than the end 7E of the tire width direction outer side of the belt 7 in the first half portion 11. Such a configuration increases the rigidity of the first sidewall portion 31 of the first half portion 11 compared to a configuration in which the first carcass foldback portion 61B terminates in the middle of the first sidewall portion 31. Accordingly, the durability of the communication device 9 embedded in the first sidewall portion 31 of the first half portion 11 is further improved.

The tire 1 further includes a belt 7 arranged on the tire radial direction outer side of the carcass body portion 6A, and the first end 61E of the first carcass foldback portion 61B is preferably positioned further to the tire width direction outer side than the end 7E of the tire width direction outer side of the belt 7 in the first half portion 11. When a load in the tire radial direction is applied to the tire, such a configuration suppresses any out-of-plane deformation in the first sidewall portion 31 of the first half portion 11 to the tire width direction of the inner portion 31A, in which the first carcass foldback portion 61B is arranged. Accordingly, the communication device 9 embedded in the first sidewall portion 31 of the first half portion 11 becomes less susceptible to damage.

In the tire 1, the communication device 9 is preferably embedded in the first sidewall portion 31 of the first half portion 11, further to the tire width direction outer side than the first carcass foldback portion 61B. Such a configuration improves the communication performance of the communication device 9 when the communication device 9 communicates with an electronic device positioned on the vehicle installation outer side of the tire 1.

In the tire 1, the communication device 9 is preferably embedded in the first sidewall portion 31 of the first half portion 11, further to the tire width direction inner side than the carcass body portion 6A. Such a configuration makes the communication device 9 less susceptible to being damaged when a load in the tire radial direction is applied to the tire 1.

In the tire 1, the communication device 9 is preferably embedded in the first sidewall portion 31 of the first half portion 11, further to the tire width direction outer side than the carcass body portion 6A and further to the tire width direction inner side than the first carcass foldback portion 61B. Such a configuration makes the communication device 9 less susceptible to being damaged by an impact from the outer surface or the inner surface of the tire 1.

Note that although the tire has been described based on the drawings and embodiments, a person skilled in the art can make various modifications and adjustments based on the present disclosure. For example, the configuration, functions, or the like included in each embodiment can be rearranged not to be logically inconsistent. The configuration, functions, or the like included in each embodiment can be used in combination with other embodiments, and multiple configurations, functions, or the like can be combined into one, divided, or partially omitted.

### REFERENCE SIGNS LIST

1: tire, 11: first half portion, 12: second half portion, 2: bead portion, 21: first bead portion, 22: second bead portion, 3: sidewall portion, 31: first sidewall portion, 32: second sidewall portion, 4: tread portion, 5: bead core, 51: first bead core, 52: second bead core, 6: carcass, 6A: carcass body portion, 61B: first carcass foldback portion, 62B: second carcass foldback portion, 61E: end of first carcass foldback portion, 62E: end of second carcass foldback portion, 7: belt, 7E: end of belt, 8: bead filler, 81B: first bead filler, 82B: second bead filler, 9: communication device, CL: tire equatorial plane, W: tire maximum width, L1: length of first bead filler, L2: length of second bead filler.

## Claims

1. A tire (1) including a first half portion (11) on a vehicle installation outer side and a second half portion (12) on a vehicle installation inner side, with respect to a tire equatorial plane (CL), the tire (1) comprising:
a carcass (6) that extends between a first bead core (51) positioned in the first half portion (11) and a second bead core (52) positioned in the second half portion (12),
the carcass (6) comprising:
a carcass body portion (6A) that extends toroidally between the first bead core (51) and the second bead core (52);
a first carcass foldback portion (61B) that extends from the carcass body portion (6A), folds back around a perimeter of the first bead core (51) from a tire width direction inner side to a tire width direction outer side, and extends to a tire radial direction outer side;
a second carcass foldback portion (62B) that extends from the carcass body portion (6A), folds back around a perimeter of the second bead core (52) from the tire width direction inner side to the tire width direction outer side, and extends to the tire radial direction outer side,
wherein a first end (61E) of the tire radial direction outer side of the first carcass foldback portion (61B) is positioned further to the tire radial direction outer side than a second end (62E) of the tire radial direction outer side of the second carcass foldback portion (62B),
**characterized in that** a communication device (9) is embedded in a sidewall portion (31) of the first half portion (11), further to the tire radial direction inner side than the first end (61E) and further to the tire radial direction outer side than the second end (62E), and
the communication device (9) is positioned, in the sidewall portion (31) of the first half portion (11), further to the tire radial direction outer side than a position of tire maximum width (W).

2. The tire (1) according to claim 1, further comprising a belt (7) arranged on the tire radial direction outer side of a crown region of the carcass (6),
wherein the first end (61E) of the first carcass foldback portion (61B) is positioned further to the tire width direction inner side than an end (7E) of the tire width direction outer side of the belt (7) in the first half portion (11).

3. The tire (1) according to claim 1, further comprising a belt (7) arranged on the tire radial direction outer side of the carcass body portion (6A),
wherein the first end (61E) of the first carcass foldback portion (61B) is positioned further to the tire width direction outer side than an end (7E) of the tire width direction outer side of the belt (7) in the first half portion (11).

4. The tire (1) according to any one of claims 1 to 3, wherein the communication device (9) is embedded in the sidewall portion (31) of the first half portion (11), further to the tire width direction outer side than the first carcass foldback portion (61B).

5. The tire (1) according to any one of claims 1 to 3, wherein the communication device (9) is embedded in the sidewall portion (31) of the first half portion (11), further to the tire width direction inner side than the carcass body portion (6A).

6. The tire (1) according to any one of claims 1 to 3, wherein the communication device (9) is embedded in the sidewall portion (31) of the first half portion (11), further to the tire width direction outer side than the carcass body portion (6A) and further to the tire width direction inner side than the first carcass foldback portion (61B).

## Patentansprüche

1. Reifen (1), welcher einen ersten Halbabschnitt (11) auf einer äußeren Fahrzeuginstallationsseite und einen zweiten Halbabschnitt (12) auf einer inneren Fahrzeuginstallationsseite in Bezug auf eine Reifenäquatorebene (CL) beinhaltet, wobei der Reifen (1) umfasst:
eine Karkasse (6), welche sich zwischen einem ersten Wulstkern (51), welcher in dem ersten Halbabschnitt (11) positioniert ist, und einem zweiten Wulstkern (52) erstreckt, welcher in dem zweiten Halbabschnitt (12) positioniert ist,
wobei die Karkasse (6) umfasst:
einen Karkassenkörperabschnitt (6A), welcher sich toroidal zwischen dem ersten Wulstkern (51) und dem zweiten Wulstkern (52) erstreckt;
einen ersten Karkassenrückfaltabschnitt (61B), welcher sich von dem Karkassenkörperabschnitt (6A) aus erstreckt, um einen Umfang des ersten Wulstkerns (51) von einer Innenseite in Reifenbreitenrichtung zu einer Außenseite in Reifenbreitenrichtung zurückgefaltet ist und sich in einer Außenseite in Reifenradialrichtung erstreckt;
einen zweiten Karkassenrückfaltabschnitt (62B), welcher sich von dem Karkassenkörperabschnitt (6A) aus erstreckt, um einen Umfang des zweiten Wulstkerns (52) von der Innenseite in Reifenbreitenrichtung zu der Außenseite in Reifenbreitenrichtung zurückgefaltet ist und sich zu der Außenseite in Reifenradialrichtung erstreckt,
wobei ein erstes Ende (61E) der Außenseite in Reifenradialrichtung des ersten Karkassenrückfaltabschnitts (61B) weiter zu der Außenseite in Reifenradialrichtung hin positioniert ist als ein zweites Ende (62E) der Außenseite in Reifenradialrichtung des zweiten Karkassenrückfaltabschnitts (62B),
**dadurch gekennzeichnet, dass** eine Kommunikationsvorrichtung (9) in einen Seitenwandabschnitt (31) des ersten Halbabschnitts (11) eingebettet ist, und zwar weiter zu der Innenseite in Reifenradialrichtung als das erste Ende (61E) und weiter zu der Außenseite in Reifenradialrichtung als das zweite Ende (62E), und
die Kommunikationsvorrichtung (9) in dem Seitenwandabschnitt (31) des ersten Halbabschnitts (11) weiter zu der Außenseite in Reifenradialrichtung positioniert ist als eine Position der maximalen Reifenbreite (W).

2. Reifen (1) nach Anspruch 1, weiter einen Gürtel (7) umfassend, welcher auf der Außenseite in Reifenradialrichtung eines Scheitelbereichs der Karkasse (6) angeordnet ist,
wobei das erste Ende (61E) des ersten Karkassenrückfaltabschnitts (61B) in Reifenbreitenrichtung weiter zu der Innenseite positioniert ist als ein Ende (7E) der Außenseite in Reifenbreitenrichtung des Gürtels (7) in dem ersten Halbabschnitt (11).

3. Reifen (1) nach Anspruch 1, weiter einen Gürtel (7) umfassend, welcher auf der Außenseite in Reifenradialrichtung des Karkassenkörperabschnitts (6A) angeordnet ist,
wobei das erste Ende (61E) des ersten Karkassenrückfaltabschnitts (61B) in Reifenbreitenrichtung weiter zu der Außenseite positioniert ist als ein Ende (7E) der Außenseite in Reifenbreitenrichtung des Gürtels (7) in dem ersten Halbabschnitt (11).

4. Reifen (1) nach einem der Ansprüche 1 bis 3, wobei die Kommunikationsvorrichtung (9) in dem Seitenwandabschnitt (31) des ersten Halbabschnitts (11) in Reifenbreitenrichtung weiter zu der Außenseite eingebettet ist als der erste Karkassenrückfaltabschnitt (61B).

5. Reifen (1) nach einem der Ansprüche 1 bis 3, wobei die Kommunikationsvorrichtung (9) in dem Seitenwandabschnitt (31) des ersten Halbabschnitts (11) in Reifenbreitenrichtung weiter zu der Innenseite eingebettet ist als der Karkassenkörperabschnitt (6A).

6. Reifen (1) nach einem der Ansprüche 1 bis 3, wobei die Kommunikationsvorrichtung (9) in dem Seitenwandabschnitt (31) des ersten Halbabschnitts (11) in Reifenbreitenrichtung weiter zu der Außenseite als der Karkassenkörperabschnitt (6A) und in Reifenbreitenrichtung weiter zu der Innenseite eingebettet ist als der erste Karkassenrückfaltabschnitt (61B).

## Revendications

1. Pneu (1) incluant une première moitié (11) sur un côté extérieur d'installation de véhicule et une seconde moitié (12) sur un côté intérieur d'installation de véhicule, par rapport à un plan équatorial de pneu (CL), le pneu (1) comprenant :
une carcasse (6) qui s'étend entre une première tringle (51) positionnée dans la première moitié (11) et une seconde tringle (52) positionnée dans la seconde moitié (12),
la carcasse (6) comprenant :
une partie de corps de carcasse (6A) qui s'étend de manière toroïdale entre la première tringle (51) et la seconde tringle (52) ;
une première partie de repli de carcasse (61B) qui s'étend à partir de la partie de corps de carcasse (6A), se replie autour d'un périmètre de la première tringle (51) d'un côté intérieur dans le sens de la largeur du pneu à un côté extérieur dans le sens de la largeur du pneu, et s'étend jusqu'à un côté extérieur dans le sens radial du pneu ;
une seconde partie de repli de carcasse (62B) qui s'étend à partir de la partie de corps de carcasse (6A), se replie autour d'un périmètre de la seconde tringle (52) du côté intérieur dans le sens de la largeur du pneu au côté extérieur dans le sens de la largeur du pneu, et s'étend jusqu'au côté extérieur dans le sens radial du pneu,
dans lequel une première extrémité (61E) du côté extérieur dans le sens radial du pneu de la première partie de repli de carcasse (61B) est positionnée plus loin vers le côté extérieur dans le sens radial du pneu qu'une seconde extrémité (62E) du côté extérieur dans le sens radial du pneu de la seconde partie de repli de carcasse (62B),
**caractérisé en ce qu'**un dispositif de communication (9) est intégré dans une partie de flanc (31) de la première moitié (11), plus loin vers le côté intérieur dans le sens radial du pneu que la première extrémité (61E) et plus loin vers le côté extérieur dans le sens radial du pneu que la seconde extrémité (62E), et
le dispositif de communication (9) est positionné, dans la partie de flanc (31) de la première moitié (11), plus loin vers le côté extérieur dans le sens radial du pneu qu'une position de largeur maximale du pneu (W).

2. Pneu (1) selon la revendication 1, comprenant en outre une ceinture (7) agencée sur le côté extérieur dans le sens radial du pneu d'une région de sommet de la carcasse (6),
dans lequel la première extrémité (61E) de la première partie de repli de carcasse (61B) est positionnée plus loin vers le côté intérieur dans le sens de la largeur du pneu qu'une extrémité (7E) du côté extérieur dans le sens de la largeur du pneu de la ceinture (7) dans la première moitié (11).

3. Pneu (1) selon la revendication 1, comprenant en outre une ceinture (7) agencée sur le côté extérieur dans le sens radial du pneu de la partie de corps de carcasse (6A),
dans lequel la première extrémité (61E) de la première partie de repli de carcasse (61B) est positionnée plus loin vers le côté extérieur dans le sens de la largeur du pneu qu'une extrémité (7E) du côté extérieur dans le sens de la largeur du pneu de la ceinture (7) dans la première moitié (11).

4. Pneu (1) selon l'une quelconque des revendications 1 à 3, dans lequel le dispositif de communication (9) est intégré dans la partie de flanc (31) de la première moitié (11), plus loin vers le côté extérieur dans le sens de la largeur du pneu que la première partie de repli de carcasse (61B).

5. Pneu (1) selon l'une quelconque des revendications 1 à 3, dans lequel le dispositif de communication (9) est intégré dans la partie de flanc (31) de la première moitié (11), plus loin vers le côté intérieur dans le sens de la largeur du pneu que la partie de corps de carcasse (6A).

6. Pneu (1) selon l'une quelconque des revendications 1 à 3, dans lequel le dispositif de communication (9) est intégré dans la partie de flanc (31) de la première moitié (11), plus loin vers le côté extérieur dans le sens de la largeur du pneu que la partie de corps de carcasse (6A) et plus loin vers le côté intérieur dans le sens de la largeur du pneu que la première partie de repli de carcasse (61B).
